# EUROPEAN PATENT SPECIFICATION

(11) **EP 4 078 039 B1**
(45) Date of publication and mention of the grant of the patent: **25.10.2023**
(21) Application number: 20838957.7
(22) Date of filing: 18.12.2020
(51) Int. Cl.: F24F 11/33, F24F 3/044, F24F 13/02, F24F 13/08

(54) **VENTILATION DUCT UNIT**
LÜFTUNGSKANALEINHEIT
UNITÉ DE VENTILATION

(30) Priority: 19.12.2019 FI 20196101
(43) Date of publication of application: 26.10.2022
(73) Proprietor: FläktGroup Sweden AB, 551 84 Jönköping (SE)
(72) Inventor: MIKKONEN, Jari, 37801 Akaa (FI); HOKKANEN, Jari, 37801 Akaa (FI); KAASALAINEN, Timo, 37801 Akaa (FI)
(74) Representative: Kolster Oy Ab
(86) International application number: PCT/EP2020/087033
(87) International publication number: WO 2021/123175

(56) References cited:
- EP-A1- 1 267 133
- WO-A1-94/08167
- US-A1- 2004 224 627
- US-A1- 2014 203 090
- US-A1- 2018 311 519
- US-A1- 2019 257 545

## Description

### Field of Invention

The invention relates to a ventilation duct unit, and in particular to testing of the functioning of a closing part of the ventilation duct unit in case of fire.

### Background Art

When implementing a ventilation duct, one aspect to consider besides implementing ventilation, is fire safety. In practice the ventilation duct must be implemented in a way that in case of fire, spreading of the fire can be effectively and quickly stopped.

In known solutions the above-mentioned attributes have been implemented by arranging a ventilation duct unit, that has a closing part in case of fire, into the ventilation duct.

One challenge regarding fire safety is testing of the fire safety feature of the ventilation unit. In practice, authorities require regular testing of the fire safety feature, to make sure that it works in case of fire.

However, regular testing of the fire safety feature is difficult, because in practice the ventilation ducts of a building may have a very high quantity of such closing parts, that require testing, often arranged in difficult locations. The closing parts are also not visible to the outside of the ventilation ducts but are hidden inside the ventilation duct units. Due to this, regular manual testing of them is laborious and takes so much time, that in practice it causes a longstanding disruption to normal ventilation of the building for the duration of the test or tests.

US 2004/224627 A1 discloses a fire/smoke damper control system provided for use in monitoring and controlling operation of one or more fire/smoke dampers in a building. The system includes a local damper controller associated with each fire/smoke damper for controlling the opening and closing of each fire/smoke damper, a remote router for controlling the operation of one or more local damper controllers, and circuit communication between the remote router and each local damper controller. US 2014/203090 A1 discloses a wireless damper control and test system comprising a portable wireless controller for communicating with a wireless interface using an identifier whereby actuation timing of a damper actuator is transmitted by signal, the wireless interface connected to a damper to be controlled or tested using the transmitted signal

### Summary of Invention

The object of the invention is to solve the above described problem and to offer a solution that enables testing of the fire safety feature in case of fire to be done cost efficiently, simply, and quickly. This object is achieved with a ventilation duct unit according to independent claim 1.

By utilizing a ventilation duct unit, which has a position switch of a closing member, which is in first state when the closing part is in a predetermined position, and which is in second state when the closing part is not in said predetermined position, and which has a fire test unit, which triggers testing of the fire safety function, wherein the closing member sets the closing part into said predetermined position, the fire testing unit can simply and easily trigger implementation of the fire testing function at a predetermined time. Hence the fire testing unit can indicate success of the fire safety function after triggering if it detects a predetermined change between the first state and the second state of the position switch of the closing part after triggering. This way, testing of the fire safety function can be automized to be executed simply, easily, and quickly.

### Brief Description of Drawings

The invention is further described in the following examples by referencing enclosed figures, of which:
figure 1 presents a first preferred embodiment of the ventilation duct,
figure 2 presents a cross section of the ventilation duct unit of figure 1, and
figure 3 presents a second preferred embodiment of the ventilation duct.

### Description of at least one embodiment

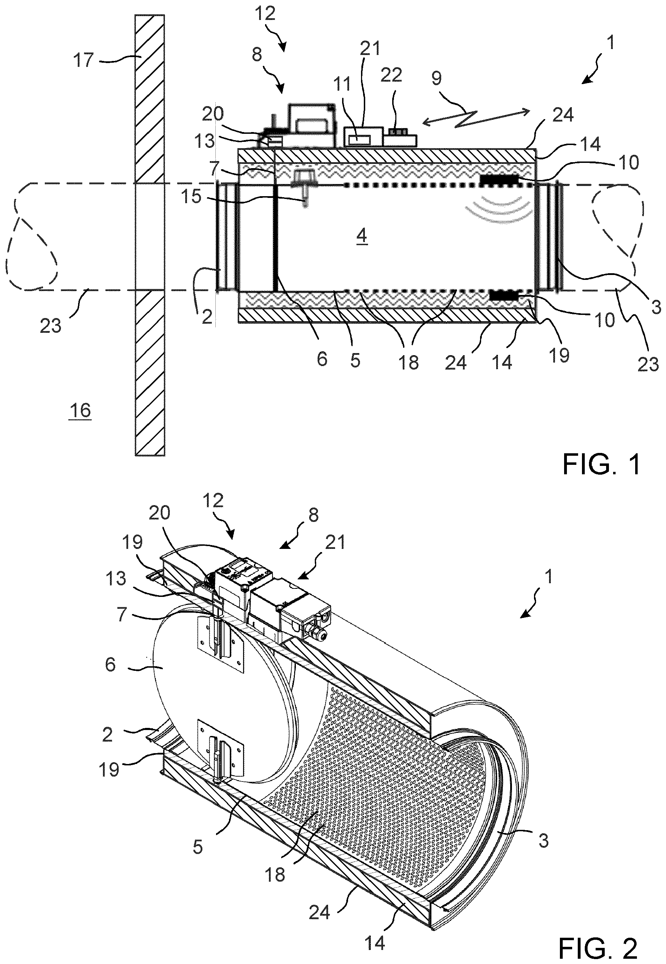

A ventilation duct unit described in figures 1 and 2 comprises a flow channel 4, which extends from an input opening 2 to an output opening 3, and which is delimited by a wall 5 between the input opening 2 and the output opening 3. In the example case presented in the figures, the ventilation duct unit is shaped so that the wall 5 forms a cylinder-shaped pipe, which has a diameter that can vary for example between 100 - 315 mm. In figure 1 the ventilation duct unit 1 is connected to a ventilation duct 23 which continues on both sides of the air conditioning duct unit as a ventilation pipe.

A closing part 6 is arranged inside the flow channel 4, which closing part presented in open position in figure 2, enables flow in the flow channel 4, and which closing part presented in closed position in figure 1 prevents flow in the flow channel. The closing part 6 changes position between the open and the closed position by rotating in the flow channel about axis 7.

In normal state, which is when the ventilation duct unit 1 is used to control the airflow through the ventilation duct, an actuator 8 moves the closing part 6 between open and closed position by rotating it about the axis 7 in order to achieve flow defined for the actuator in the flow channel 4. For this purpose, there can be for example an electric motor integrated into the actuator, which electric motor is controlled by the control unit of the actuator by utilizing content of its memory. Thus, actuator 8 controls the position of the closing part 6 according to the command coming from the controller. In addition, the actuator can pass information about the true position of the closing part 6 to the controller of the actuator. In the example case presented in the figures, the control unit of the actuator and the fire testing unit 21 are implemented as an integrated part, which is a very cost-efficient solution. The user can save a set value to be utilized in the controlling of the airflow according to temperature or CO₂ concentration to the memory 11, locally via an user interface, or alternatively via wired or wireless communications link 9, which is used to connect the ventilation duct unit to a separately located control centre which is included in the building automation (not presented in figures). The control unit of the actuator in that case compares measured flow against the set value and controls the actuator 8 based on this. Additionally, control unit of the actuator can pass information about the measured flow to the control centre.

In the example presented in figures, also a member 10 for measuring flow is arranged inside the flow channel 4 of the ventilation duct unit 1, in which case the control unit of the actuator 8 receives information of the measured flow, and based on this measurement and set value sends a message to the actuator 8, which moves the closing part 6 in order to achieve the defined flow assigned by the set value. The ventilation duct unit can so function as a VAV-controller (Variable Air Volume) for example in an apartment, in a hotel, in an office, in a school or in health care facilities. Member 10, which is used for measuring flow, can in practice be made up of an ultrasonic sensor, which includes an ultrasonic transmitter and an ultrasonic receiver. Power supply for the member 10 can be implemented from the control unit of the actuator 8, which in practice also receives information of the measured flow and also of the temperature measured by member 10, if a member that is capable of measuring temperatures is used.

The ventilation duct unit 1 also includes a closing member 12, which in the example cases of the figures is implemented as a part of the actuator 8. In this example case the closing member 12 implemented as a part of the actuator 8, comprises a spring 13, for example a coil spring, which in case of fire sets the closing member 6 to a predetermined position with spring force by rotating about axis 7. Due to spring force, the closing member 12 ensures that the predetermined position is achieved also when electricity is not available. Detection of fire can be done by ventilation duct unit 1, for example so that one or more thermal fuses 15 are arranged inside the flow channel 4, which allows the actuator 8 to track the temperature. In the example case of the figures, one thermal fuse 15 is located in the channel and a second thermal fuse can be integrated in the actuator 8 itself. In practice the power supply from the control unit of the actuator to the actuator 8 can be implemented through a thermal fuse or through more than one thermal fuses, so that blowing of even one thermal fuse shuts off the power supply to the actuator 8. When the temperature reaches a threshold value set for detecting fire, a thermal fuse 15 blows, in which case the actuator 8 or its control unit triggers the closing member 12 to set the closing part 6 to a predetermined position. Alternatively, the actuator can detect fire based on the signal relayed through its communications link 9. In this case the thermal fuse or for example a smoke detector can be arranged separately from the ventilation duct unit, in which case the signal is relayed to the actuator, for example from a separately located control centre. For example, a part that breaks down mechanically if the threshold temperature is exceeded can be used as a thermal fuse.

The actuator 8 or its control unit can trigger the closing member 12 to set the closing part 6 to a predetermined position for example so, that when fire is detected, the actuator 8 stops moving the closing part 6. In that case only the spring force of spring 13 affects the closing part 6, in which case the spring force takes the closing part 6 to a predetermined position. What this predetermined position is, varies due to for example location of the installation and regulations set by the authorities. One option is that as a response to detecting fire, the closing member 12 sets the closing part 6 to a closed position presented in figure 1. In that case, for example spreading of the fire through the ventilation duct unit is prevented. Alternatively, the closing member 12 can, as a response to detecting fire, set the closing part 6 to an open position presented in figure 2. In that case, for example an airflow can be ensured into a desired space or out of a desired space through the ventilation duct unit in case of fire.

In the example of the figures, ventilation duct unit 1 comprises a fireproof insulation material layer 14 which surrounds the wall 5 of the flow channel 4 and isolates the surrounded wall part of the flow channel 4 from its surroundings. In practice, the ventilation duct unit 1 can be implemented so, that its wall has a dual structure, in which case in addition to the wall 5 that delimits the flow channel 4, the ventilation duct 1 also features an outer wall 24, which closes in the wall 5 of the flow channel 4 and the fireproof insulation material 14 that surrounds it. In practice, both the wall 5 and the outer wall 24 can be made of metal, for example steel. Alternatively, the wall 5 can be for example implemented with coated mineral wool or other fireproof damping material.

In case of fire, where the fire ignites in space 16, which is on the other side of a partition wall 17 of a building from the ventilation duct unit 1, can the closing part 6 of the ventilation duct unit 1 in situation of figure 1 by closing, stop the spreading of the fire from space 16 into a space located on the right in figure 1 via airflow through the partition wall. However, in that case a rise in the temperature of the outer surface of the ventilation duct unit 1 can cause a problem. To prevent this and to follow regulations set by the authorities, the fireproof insulation material 14 can be designed so that the temperature of the outer wall 24 stays inside defined thresholds. A suitable insulation material for this purpose is for example mineral wool.

One advantage that is gained with an effective fireproof insulation layer 14 is, that the closing part 6 can be designed to be thin compared to thickness of known fire dampers, which often have to be designed to be even 30 mm thick. In practice, the closing part can be implemented as a closing flap, which can have a thickness of for example 20 mm or even less. This is because heat transferring from space 16 located on the left in figure 1 through closing part 6 to right into the flow channel 4, does not cause direct harm or danger, because the insulation layer 14 of the ventilation duct unit 1 prevents in this case the transfer of this heat load through its outer wall 24 into the space surrounding it. A significant advantage can be achieved with a thin closing part, because when controlling the airflow through the ventilation duct unit 1 in normal state, it is significantly easier to implement accurate controlling than if using a thick closing part 6. In addition, a thick closing part causes a larger pressure loss and develops more disturbing sound.

From figures 1 and 2 it is observed that holes 18 are formed in the wall 5 that is surrounded by the fireproof insulation material 14. The medium, such as air, flowing in the flow channel 4 is brought into contact with the insulation material through these holes. The size and number of the holes varies based on the implementation. One alternative is to for example use holes with 3 mm diameter so that on the holed area of the wall, area of the holes is approximately 30 % of the total area of the holed area. In this case, an efficient sound reduction is achieved by utilizing the insulation material. In the example presented in figures, the closing part 6 is arranged to a part of the flow channel 4, which does not have holes in its wall, in which case closing part 6 can close the flow channel tightly, without possible leaks caused by the holes.

Depending on the implementation, the space between the wall 5 of the flow channel 4 and the outer wall 24, can be filled by using one single fireproof insulation material, or alternatively more than one different insulation materials can be arranged in this space. One alternative, which is illustrated as an example in figures 1 and 2, is that a layer structure is used. In this case, closest to wall 5, insulation material 19 can be used, which achieves the best possible sound reduction, so that flow noise created in flow channel 4 can be efficiently prevented from transferring through outer wall 24 to the surroundings. The inner insulation material 19 can be surrounded by a layer made of fireproof insulation material 14.

As the above shows, the same ventilation duct unit formed of single part is suitable to be used in a ventilation duct as a fire damper, as a silencer, and as a controller of the airflow. This is a significant advantage, because it makes it possible to avoid implementing these functions with multiple ventilation duct units set one after another, in which case the need for space is reduced to under halve of the needed space compared to traditional solutions. Also, flow loss caused by a traditional fire damper in the flow channel can be avoided. In addition, in planning, in installing, and in cabling the needs of only one ventilation duct unit need to be considered, in which case the cost savings are significant.

The ventilation duct unit 1 illustrated in figures also includes a position switch 20 of the closing part, which is in first state, when closing part 6 is in predetermined position (meaning the position, which the closing member sets it to in case of fire), and which is in second state, when the closing part is not in said predetermined position. In practice the position switch 20 can be implemented for example with a simple mechanical switch, which has a moving part that closes an electric circuit, which moving part is touched and pressed by closing part 6, closing member 12, actuator 8 or axis 7 which moves the closing part, when the closing part reaches a predetermined position. In this case the fire testing unit receives information, that the closing part 6 is in a predetermined position.

In the example case of the figures, it is assumed that the fire testing unit is implemented as a part of the control unit of the actuator 8. In this case it is an integrated and very cost-efficient solution. In practice the fire testing unit can be implemented for example as a program, which is implemented by a processor of the control unit of the actuator by utilizing data saved in a memory 11. At predetermined times, the fire testing unit triggers an automatic testing of the fire safety function, where the closing part 6 is set to a predetermined position. Alternatively, testing of the fire safety function can activate through a control signal via the communications link 9, that is sent from a separately located control centre, in which case the fire testing unit triggers testing of the fire safety functions as a result of such activation. Accordingly, after detecting fire, this can happen in such way, that the actuator 8 stops moving the closing part, in which case the spring force of the spring 13 takes the closing part 6 to a predetermined position. In practice, the fire testing unit 21 can cut the power supply to the actuator 8 in order to test the fire safety function.

After triggering the fire safety function, the fire testing unit 21 tracks the state of the position switch 20 to determine if the state of the position switch changes in a predetermined way between the first and the second state after triggering. The exact way the state of the position switch should change "in a predetermined way" can vary from one implementation to another.

One alternative is, that the fire testing unit 21 detects that the state of the position switch 20 has changed in a predetermined way, when it detects that the position switch is in first state after triggering the test. In this case, the fire testing unit can indicate that testing of the fire safety function was successful.

Alternatively, one option is that the fire testing unit gives an indication of the success of the testing only when the position switch has moved to first state (closing part 6 has reached a predetermined position) in first stage after triggering, and when the fire testing unit after this in second stage has returned the power supply to the actuator 8, and the fire testing unit 21 detects that the position switch is no longer in first state (closing part 6 has moved off of the predetermined position).

Indication can happen locally with an indicator, such as a LED 22, that is connected to the ventilation duct unit 1. In addition to this or alternatively, indication can happen in a way that the fire testing unit 21 sends a predetermined signal via the connections link 9 from the ventilation duct unit 1 to a separately located control unit. By implementing the fire testing unit as an integrated part of the ventilation duct unit, compared to an alternative where testing of the fire safety function is implemented by a separate control system, an advantage is gained in simplifying cabling, installation and implementation. Thus, cost savings are achieved and in addition the time needed for installation shortens.

After triggering testing of the fire safety function, the fire testing unit 21 aborts the fire safety testing by activating the actuator to again move the closing part when the testing of the fire safety function is successful, or when a predetermined amount of time has passed after triggering testing of the fire safety function, without the testing of the fire safety function being successful. In practice, in this case, testing of the fire safety function is failed. The fire testing unit can indicate failed testing of the fire safety function locally with the indicator 22 or with a message to the control unit via the communications link 9.

In order for testing of fire testing function to be done automatically at times required by authorities, the fire testing unit 21 maintains a calendar in memory 11, which in practice is data that allocates the times when testing of the fire testing function is to be triggered. A clock is implemented in the fire testing unit 21, in which case based on the clock and this data, the fire testing unit is capable of independently triggering and implementing testing of the fire testing functions at determined times. Testing of the fire safety functions implemented in this way can be started and finished automatically also when the ventilation duct unit in question is in use and controlling the airflow of a room space, because completing the testing event of the fire safety functions is very fast, making the disruption to implemented airflow minimal.

An example of the ventilation duct unit is described above by referring to an input hole and an output hole, flow being implementable between thereof. In practice the same described ventilation duct unit can be utilized in controlling flows flowing in both directions. So, if the flow direction is for example temporarily in the example case presented in figures 1 and 2 from right to left, the hole 3 located on right side functions in this case as the input hole and the hole located on the left as the output channel.

In the context of figures 1 and 2, it is as an example illustrated, that the wall 5 delimits the flow channel, and has holes through which the medium flowing in the flow channel can reach contact with the insulation material. However, deviating from this, it is possible, that the surface of the insulation material facing the flow channel forms this wall. In that case, the surface of the insulation material can be coated with a suitable material. In any case, the need for using a separate wall from the insulation material can be avoided, and thus no holes are needed to form on such wall, as flow gets in contact with the insulation material even without the holes.

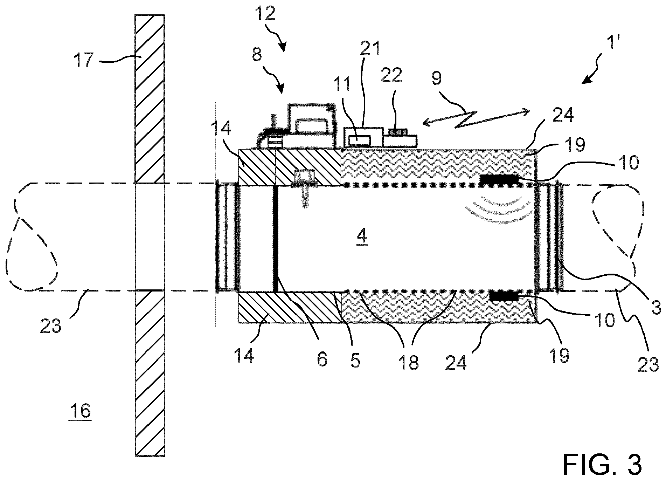

Figure 3 illustrates a second embodiment of the ventilation duct unit 1'. The embodiment of figure 3 matches largely the embodiment illustrated in figures 1 and 2. This is why the embodiment of figure 3 is primarily described in the following by referring to the differences between these embodiments.

Also the embodiment of figure 3 illustrates the use of first insulation material 14 and the use of second insulation material 19 in the space between the flow channel wall 5 and the outer wall 24. However, in the embodiment of figure 3 the insulation material has been arranged into zones. The insulation material 14 with the best fireproof qualities is arranged into the first zone that is closest to the closing part 6, and which surrounds the flow channel for part of the length of the flow channel 4. The insulation material 19 with the best sound reduction qualities is arranged into the second zone, which is located at the site of the holes 18, and which surrounds the flow channel for part of the length of the flow channel 4. So, the end result is a solution, wherein the best fireproofing is reached in that part of the ventilation duct unit 1', which has the highest temperature as a result of a fire in space 16, and which reaches the best sound reduction in the holed part formed for optimizing sound reduction.

In practice, deviating from figures 1 - 3, it is also possible to utilize both layered, and zone divided insulation in the same ventilation duct unit. In that case, for example insulation materials 14 and 19 of figure 3 can be surrounded over the length of the whole ventilation duct unit with an additional layer of insulation, where a third insulation material, or alternatively one of the two insulation materials 14 or 19, can be used.

It is to be understood that the above description and the accompanying figures are only meant to illustrate the presented invention. It will be apparent to a person skilled in the art that the invention can be modified also in other ways without departing from the scope of the invention as defined in the appended claims.

## Claims

1. Ventilation duct unit (1, 1') comprising
an inlet (2),
an outlet (3),
a flow channel (4), which extends from the inlet to the outlet, and which is delimited by a wall (5) between the inlet and the outlet,
a closing part (6), which is arranged in the flow channel, and which in an open position enables flow in the flow channel (4), and in a closed position prevents flow in the flow channel,
an actuator (8), which is configured to move the closing (6) part between the open and the closed position to achieve flow that is defined for the ventilation duct unit in the flow channel,
a closing member (12) which as a response to detecting fire, sets the closing part (6) to a predetermined position,
a position switch (20) of the closing part (6), which is in a first state, when the closing part (6) is in said predetermined position, and which is in a second state, when the closing part (6) is not in said predetermined position, and
a fire testing unit (21), which at predetermined times is configured to trigger testing of the fire safety functions, wherein the closing member (12) sets the closing part (6) to said predetermined position, and which after triggering testing of the fire safety functions, is configured to indicate that testing of the fire safety functions was successful, if the fire testing unit detects that the state of the position switch (20) of the closing part (6) has changed in a predetermined way between the first and the second state after the triggering, **characterized in that**
the fire testing unit (21) comprises a clock, and a memory (11), to which data is saved and which indicates the times when the fire test is to be triggered, and the fire testing unit (21) is arranged to trigger testing of the fire safety functions when the clock indicates a time which corresponds with the triggering time of testing of the fire safety functions saved in the memory (11), and
the fire testing unit (21) and a control unit for the actuator (8) are integrated into one part.

2. Ventilation duct unit according to claim 1, **characterized in that** the fire testing unit (21) detects that the state of the position switch (20) of the closing part has changed in the predetermined way after the triggering, when the position switch has moved to the first state after the triggering.

3. Ventilation duct unit according to claim 1, **characterized in that** the fire testing unit (21) detects that the state of the position switch (20) of the closing part has changed in the predetermined way after the triggering, when the position switch has moved to the first state in a first stage after the triggering, and when after this the fire testing unit (21) detects that the position switch (20) of the closing part has moved to the second state in a second stage after aborting the testing of the fire safety functions.

4. Ventilation duct unit according to any of the claims 1 - 3, **characterized in that** the fire testing unit (21) indicates the success of the fire testing functions through an indicator (22) connected to the ventilation duct unit (1, 1').

5. Ventilation duct unit according to any of the claims 1 - 4, **characterized in that** the fire testing unit (21) indicates the success of the fire testing functions by sending a predetermined signal via a communications link (9) to a control unit located separately from the ventilation duct unit.

6. Ventilation duct unit according to any of the claims 4 - 5, **characterized in that** the fire testing unit (21) aborts testing of the fire safety functions by activating the actuator (8) to move the closing part (6) when it has detected that the state of the position switch (20) of the closing part has changed in the predetermined way, or when a predetermined amount of time has passed after triggering testing of the fire safety functions, without it detecting that the state of the position switch (20) of the closing part has changed in the predetermined way.

7. Ventilation duct unit according to any of the claims 1 - 6, **characterized in that** the closing member (12) sets the closing part (6) to the closed position as a response to detecting fire.

8. Ventilation duct unit according to any of the claims 1 - 6, **characterized in that** the closing member (12) sets the closing part (6) to the open position as a response to detecting fire.

9. Ventilation duct unit according to any of the claims 1 - 8, **characterized in that** the closing member (12) comprises a spring (13), spring forces of which set the closing part (6) to the predetermined position.

10. Ventilation duct unit according to any of the claims 4 - 9, **characterized in that** the flow channel (4) has a member (10) that measures flow, and that the actuator (8) moves the closing part (6) based on the measured flow to achieve a defined flow.

11. Ventilation duct unit according to any of the claims 4 - 10, **characterized in that** the flow channel has a thermal fuse (15), and that the closing member (12) sets the closing part (6) to the predetermined position when the thermal fuse (15) blows.

12. Ventilation duct unit according to any of the claims 1 - 11, **characterized in that** the ventilation duct unit further comprises:
a fireproof insulation material (14), which, for at least part of the length of the flow channel (4), surrounds the flow channel and insulates it from its surroundings.

## Patentansprüche

1. Lüftungskanaleinheit (1, 1') umfassend:
einen Einlass (2),
einen Auslass (3),
einen Strömungskanal (4), der sich von dem Einlass zu dem Auslass erstreckt und durch eine Wand (5) zwischen dem Einlass und dem Auslass begrenzt ist,
einen in dem Strömungskanal angeordneten Schließteil (6), der in einer offenen Position die Strömung in dem Strömungskanal (4) ermöglicht und in einer geschlossenen Position die Strömung in dem Strömungskanal verhindert,
einen Aktuator (8), der so konfiguriert ist, dass er den Schließteil (6) zwischen der offenen und der geschlossenen Position bewegt, um eine Strömung zu erreichen, die für die Lüftungskanaleinheit in dem Strömungskanal definiert ist,
ein Schließelement (12), das als Reaktion auf das Erkennen eines Brands den Schließteil (6) in eine vorbestimmte Position bringt,
einen Positionsschalter (20) des Schließteils (6), der sich in einem ersten Zustand befindet, wenn sich der Schließteil (6) in der vorbestimmten Position befindet, und der sich in einem zweiten Zustand befindet, wenn sich der Schließteil (6) nicht in der vorbestimmten Position befindet, und
eine Brandprüfeinheit (21), die zu vorbestimmten Zeitpunkten dafür konfiguriert ist, eine Prüfung der Brandschutzfunktionen auszulösen, wobei das Schließelement (12) den Schließteil (6) in die vorbestimmte Position bringt, und die nach dem Auslösen einer Prüfung der Brandschutzfunktionen dafür konfiguriert ist, anzuzeigen, dass die Prüfung der Brandschutzfunktionen erfolgreich war, wenn die Brandprüfeinheit feststellt, dass sich der Zustand des Positionsschalters (20) des Schließteils (6) nach der Auslösung zwischen dem ersten und dem zweiten Zustand in vorbestimmter Weise geändert hat,
**dadurch gekennzeichnet, dass**
die Brandprüfeinheit (21) eine Uhr und einen Speicher (11) umfasst, in dem Daten gespeichert sind und der die Zeitpunkte angibt, zu denen die Brandprüfung ausgelöst werden soll, und die Brandprüfeinheit (21) dafür konfiguriert ist, die Prüfung der Brandschutzfunktionen auszulösen, wenn die Uhr einen Zeitpunkt anzeigt, der mit dem Auslösezeitpunkt der Prüfung der Brandschutzfunktionen übereinstimmt, der in dem Speicher (11) gespeichert ist, und
die Brandprüfeinheit (21) und eine Steuereinheit für den Aktuator (8) in einem Teil integriert sind.

2. Lüftungskanaleinheit nach Anspruch 1, **dadurch gekennzeichnet, dass** die Brandprüfeinheit (21) erkennt, dass sich der Zustand des Positionsschalters (20) des Schließteils nach der Auslösung in der vorbestimmten Weise geändert hat, wenn sich der Positionsschalter nach der Auslösung in den ersten Zustand bewegt hat.

3. Lüftungskanaleinheit nach Anspruch 1, **dadurch gekennzeichnet, dass** die Brandprüfeinheit (21) erkennt, dass sich der Zustand des Positionsschalters (20) des Schließteils nach der Auslösung in der vorbestimmten Weise geändert hat, wenn der Positionsschalter in einer ersten Stufe nach der Auslösung in den ersten Zustand übergegangen ist, und wenn danach die Brandprüfeinheit (21) erkennt, dass der Positionsschalter (20) des Schließteils in einer zweiten Stufe nach Abbruch der Prüfung der Brandschutzfunktionen in den zweiten Zustand übergegangen ist.

4. Lüftungskanaleinheit nach einem der Ansprüche 1 bis 3, **dadurch gekennzeichnet, dass** die Brandprüfeinheit (21) den Erfolg der Brandprüffunktionen durch eine Anzeige (22) anzeigt, die mit der Lüftungskanaleinheit (1, 1') verbunden ist.

5. Lüftungskanaleinheit nach einem der Ansprüche 1 bis 4, **dadurch gekennzeichnet, dass** die Brandprüfeinheit (21) den Erfolg der Brandprüffunktionen anzeigt, indem sie ein vorbestimmtes Signal über eine Übertragungsverbindung (9) an eine Steuereinheit sendet, die getrennt von der Lüftungskanaleinheit angeordnet ist.

6. Lüftungskanaleinheit nach einem der Ansprüche 4 bis 5, **dadurch gekennzeichnet, dass** die Brandprüfeinheit (21) die Prüfung der Brandschutzfunktionen abbricht, indem sie den Aktuator (8) so aktiviert, dass er den Schließteil (6) bewegt, wenn sie erkannt hat, dass sich der Zustand des Positionsschalters (20) des Schließteils in der vorbestimmten Weise geändert hat oder wenn eine vorbestimmte Zeitspanne nach dem Auslösen der Prüfung der Brandschutzfunktionen vergangen ist, ohne dass sie erkannt hat, dass sich der Zustand des Positionsschalters (20) des Schließteils in der vorbestimmten Weise geändert hat.

7. Lüftungskanaleinheit nach einem der Ansprüche 1 bis 6, **dadurch gekennzeichnet, dass** das Schließelement (12) den Schließteil (6) als Reaktion auf die Erkennung eines Brands in die geschlossene Position bringt.

8. Lüftungskanaleinheit nach einem der Ansprüche 1 bis 6, **dadurch gekennzeichnet, dass** das Schließelement (12) den Schließteil (6) als Reaktion auf die Erkennung eines Brands in die offene Position bringt.

9. Lüftungskanaleinheit nach einem der Ansprüche 1 bis 8, **dadurch gekennzeichnet, dass** das Schließelement (12) eine Feder (13) umfasst, deren Federkräfte den Schließteil (6) in die vorbestimmte Position bringen.

10. Lüftungskanaleinheit nach einem der Ansprüche 4 bis 9, **dadurch gekennzeichnet, dass** der Strömungskanal (4) ein Element (10) aufweist, das die Strömung misst, und dass der Aktuator (8) den Schließteil (6) auf der Grundlage der gemessenen Strömung bewegt, um eine definierte Strömung zu erreichen.

11. Lüftungskanaleinheit nach einem der Ansprüche 4 bis 10, **dadurch gekennzeichnet, dass** der Strömungskanal eine Thermosicherung (15) aufweist und dass das Schließelement (12) den Schließteil (6) in die vorbestimmte Position bringt, wenn die Thermosicherung (15) auslöst.

12. Lüftungskanaleinheit nach einem der Ansprüche 1 bis 11, **dadurch gekennzeichnet, dass** die Lüftungskanaleinheit weiter Folgendes umfasst:
ein feuerfestes Isoliermaterial (14), das den Strömungskanal (4) zumindest über einen Teil der Länge umgibt und ihn von seiner Umgebung isoliert.

## Revendications

1. Unité de conduit de ventilation (1, 1') comprenant
une entrée (2),
une sortie (3),
un canal d'écoulement (4), qui s'étend à partir de l'entrée vers la sortie, et qui est délimité par une paroi (5) entre l'entrée et la sortie,
une partie de fermeture (6), qui est agencée dans le canal d'écoulement, et qui dans une position ouverte permet un écoulement dans le canal d'écoulement (4), et dans une position fermée empêche un écoulement dans le canal d'écoulement,
un actionneur (8), qui est configuré pour déplacer la partie de fermeture (6) entre la position ouverte et la position fermée pour obtenir un écoulement qui est défini pour l'unité de conduit de ventilation dans le canal d'écoulement,
un élément de fermeture (12) qui en réponse à la détection d'un incendie règle la partie de fermeture (6) sur une position prédéterminée,
un commutateur de position (20) de la partie de fermeture (6), qui est dans un premier état, lorsque la partie de fermeture (6) est dans ladite position prédéterminée, et qui est dans un deuxième état, lorsque la partie de fermeture (6) n'est pas dans ladite position prédéterminée, et
une unité de test d'incendie (21), qui à des moments prédéterminés est configurée pour déclencher un test des fonctions de sécurité incendie, dans laquelle l'élément de fermeture (12) règle la partie de fermeture (6) sur ladite position prédéterminée, et qui après le déclenchement du test des fonctions de sécurité incendie, est configuré pour indiquer que le test des fonctions de sécurité incendie a été couronné de succès, si l'unité de test d'incendie détecte que l'état du commutateur de position (20) de la partie de fermeture (6) a changé d'une manière prédéterminée entre le premier et le deuxième état après le déclenchement, **caractérisée en ce que**
l'unité de test d'incendie (21) comprend une horloge, et une mémoire (11), sur laquelle des données sont sauvegardées et qui indique les moments où le test d'incendie doit être déclenché, et l'unité de test d'incendie (21) est agencée pour déclencher le test des fonctions de sécurité incendie lorsque l'horloge indique un moment qui correspond au moment de déclenchement du test des fonctions de sécurité incendie sauvegardées dans la mémoire (11), et
l'unité de test d'incendie (21) et une unité de commande pour l'actionneur (8) sont intégrées en une seule partie.

2. Unité de conduit de ventilation selon la revendication 1, **caractérisée en ce que** l'unité de test d'incendie (21) détecte que l'état du commutateur de position (20) de la partie de fermeture a changé de la manière prédéterminée après le déclenchement, lorsque le commutateur de position s'est déplacé vers le premier état après le déclenchement.

3. Unité de conduit de ventilation selon la revendication 1, **caractérisée en ce que** l'unité de test d'incendie (21) détecte que l'état du commutateur de position (20) de la partie de fermeture a changé de la manière prédéterminée après le déclenchement, lorsque le commutateur de position s'est déplacé vers le premier état dans un premier stade après le déclenchement, et lorsque après ceci l'unité de test d'incendie (21) détecte que le commutateur de position (20) de la partie de fermeture s'est déplacé vers le deuxième état dans un deuxième stade après l'interruption du test des fonctions de sécurité incendie.

4. Unité de conduit de ventilation selon l'une quelconque des revendications 1 à 3, **caractérisée en ce que** l'unité de test d'incendie (21) indique le succès des fonctions de test d'incendie par l'intermédiaire d'un indicateur (22) connecté à l'unité de conduit de ventilation (1, 1').

5. Unité de conduit de ventilation selon l'une quelconque des revendications 1 à 4, **caractérisée en ce que** l'unité de test d'incendie (21) indique le succès des fonctions de test d'incendie par envoi d'un signal prédéterminé par le biais d'une liaison de communications (9) à une unité de commande située séparément de l'unité de conduit de ventilation.

6. Unité de conduit de ventilation selon l'une quelconque des revendications 4 et 5, **caractérisée en ce que** l'unité de test d'incendie (21) interrompt le test des fonctions de sécurité incendie par activation de l'actionneur (8) pour déplacer la partie de fermeture (6) lorsqu'il a été détecté que l'état du commutateur de position (20) de la partie de fermeture a changé de la manière prédéterminée, ou lorsqu'une quantité de temps prédéterminée est passée après le déclenchement du test des fonctions de sécurité incendie, sans qu'il détecte que l'état du commutateur de position (20) de la partie de fermeture a changé de la manière prédéterminée.

7. Unité de conduit de ventilation selon l'une quelconque des revendications 1 à 6, **caractérisée en ce que** l'élément de fermeture (12) règle la partie de fermeture (6) sur la position fermée en réponse à la détection d'un incendie.

8. Unité de conduit de ventilation selon l'une quelconque des revendications 1 à 6, **caractérisée en ce que** l'élément de fermeture (12) règle la partie de fermeture (6) sur la position ouverte en réponse à la détection d'un incendie.

9. Unité de conduit de ventilation selon l'une quelconque des revendications 1 à 8, **caractérisée en ce que** l'élément de fermeture (12) comprend un ressort (13), dont les forces de ressort règlent la partie de fermeture (6) sur la position prédéterminée.

10. Unité de conduit de ventilation selon l'une quelconque des revendications 4 à 9, **caractérisée en ce que** le canal d'écoulement (4) présente un membre (10) qui mesure l'écoulement, et que l'actionneur (8) déplace la partie de fermeture (6) sur la base de l'écoulement mesuré pour obtenir un écoulement défini.

11. Unité de conduit de ventilation selon l'une quelconque des revendications 4 à 10, **caractérisée en ce que** le canal d'écoulement présente un fusible thermique (15), et que l'élément de fermeture (12) règle la partie de fermeture (6) sur la position prédéterminée lorsque le fusible thermique (15) saute.

12. Unité de conduit de ventilation selon l'une quelconque des revendications 1 à 11, **caractérisée en ce que** l'unité de conduit de ventilation comprend en outre :
un matériau isolant ignifuge (14), qui, pour au moins une partie de la longueur du canal d'écoulement (4), entoure le canal d'écoulement et l'isole de ses environnements.
